Europäisches Patentamt

European Patent Office

Office européen des brevets

(11) Publication number: **0 023 763**
A1

# EUROPEAN PATENT APPLICATION

(21) Application number: 80302161.7

(22) Date of filing: **27.06.80**

(51) Int. Cl.³: **B 23 P 15/48**, B 23 G 5/10

(30) Priority: **06.07.79 GB 7923598**

(43) Date of publication of application: **11.02.81**
**Bulletin 81/6**

(84) Designated Contracting States: **DE FR IT**

(71) Applicant: **Wood, Henry Charles, 9 Russell Avenue Hartley, Plymouth Devon (GB)**

(72) Inventor: **Wood, Henry Charles, 9 Russell Avenue Hartley, Plymouth Devon (GB)**

(74) Representative: **Wood, Anthony Charles et al, c/o MICHAEL BURNSIDE & PARTNERS 2 Serjeants' Inn Fleet Street, London EC4Y 1HL (GB)**

(54) **Method of manufacture of toothed chasers for thread chaser die heads.**

(57) A method of manufacturing a set of chasers (32') for respective location in circumferentially spaced slots (12) in a cylindrical die body (10). An annular member (30) is formed with an internal helical thread. A plurality of correspondingly circumferentially spaced sections (32') are subsequently cut from the threaded member (30) to form a set of chasers (32') with arcuately elongate teeth constituted by arcuate portion of said internal thread. The angle (B) to a radius of each chaser (32') differs from such angle (C) of the associated die body slot (12). The chasers (32') can thus be located in their slots (12) so that the forward end (35) of each arcuately elongate tooth is nearer the die head axis than is its trailing end (36).

## METHOD OF MANUFACTURE OF TOOTHED CHASERS
## FOR THREAD CHASER DIE HEADS

This invention relates to thread chaser die heads which are commonly used on lathes, particularly capstan and automatic lathes, to form an external thread on a workpiece.

A die head comprises a plurality of circumferentially spaced chasers located in slots in a die body, each chaser having a plurality of generally parallel teeth. The forward ends of the leading teeth of the chasers accomplish most of the actual thread cutting, the subsequent teeth finishing, cleaning and polishing the cut thread, as well as serving to enforce and maintain the desired screw pitch. Threads may be single or multi-start and formed on a circular cylindrical cross-section or tapered workpiece.

Die heads are known in which generally radially aligned chasers have teeth which are elongate along substantially straight parallel lines extending substantially tangentially, actually at a small angle to provide end relief, to the workpiece. Other die heads are known in which the chasers themselves extend generally tangentially, the teeth again being elongate along straight parallel lines.

A disadvantage to these known die heads lies in their excessive overall outside diameter. In one case a known die head with a body diameter of 128 millimetres is required to cut a thread up to only 44 millimetres in diameter. It can thus be necessary to use a lathe of uneconomically large capacity to perform work, including threading, on relatively small diameter workpieces, this being particularly disadvantageous in the case of automatic lathes where a succession of operations are automatically performed.

Another disadvantage of known chasers lies in the manner in which they have to be resharpened. The chasers are set up in a jig and the leading teeth are progressively ground away during successive sharpening operations so that the cutting edges progressively fall away from the forward face of the die head. Thread cutting up to a workpiece shoulder can thereby become impossible to perform without providing a new chaser set. Moreover the grinding of each chaser in the set must be accurately correlated with the others, and if one leading tooth is damaged all the chasers in the set must be ground back to precisely the same relative extent. The side face of each chaser also requires a light accurate grinding during a resharpening operation, due to the effects of progressively grinding away the leading teeth.

According to the present invention there is provided a method of manufacturing a thread chaser die head comprising forming a plurality of circumferentially spaced chaser locating slots in a cylindrical die body, forming an annular member with an internal helical thread, cutting a corresponding plurality of correspondingly circumferentially spaced sections therefrom to form a set of thread chasers with teeth constituted by arcuate portions of said internal thread, the angle to a radius of each said chaser differing from such angle of the associated said locating slot, and locating said chasers in their associated slots, whereby the forward end of each arcuately elongate chaser tooth is nearer the die head axis than is its trailing end.

In another aspect the invention provides a thread chaser die head comprising a plurality of circumferentially spaced toothed chasers located in slots in a cylindrical die body, wherein the chaser teeth are elongate along arcs of a helix, the arcs being of the same diameters in respect of all the chasers and being centred on a different axis in respect of each said chaser, said axes being spaced apart from the axis of the die head so that the forward end of each chaser tooth is nearer the die head axis than is its trailing end.

In yet another aspect the invention provides a set of toothed chasers for a die head as set forth in the preceding paragraph, each said chaser having chaser teeth elongate along arcs of a helix, the arcs being of the same diameters in respect of all the chasers in the set and the chasers being capable of physical arrangement such that the teeth all lie in a notional helical thread pattern.

Embodiments of the invention will now be described, by way of example only, with reference to the accompanying drawings, in which:

Figure 1 is an exploded perspective view of a die head according to the invention;

Figures 2, 4 and 5 are schematic plan views of three steps in a method of manufacturing a die head according to the invention, Figure 3 being a side view of Figure 2; and

Figures 6 and 7 are schematic plan views of two steps in an alternative method according to the invention.

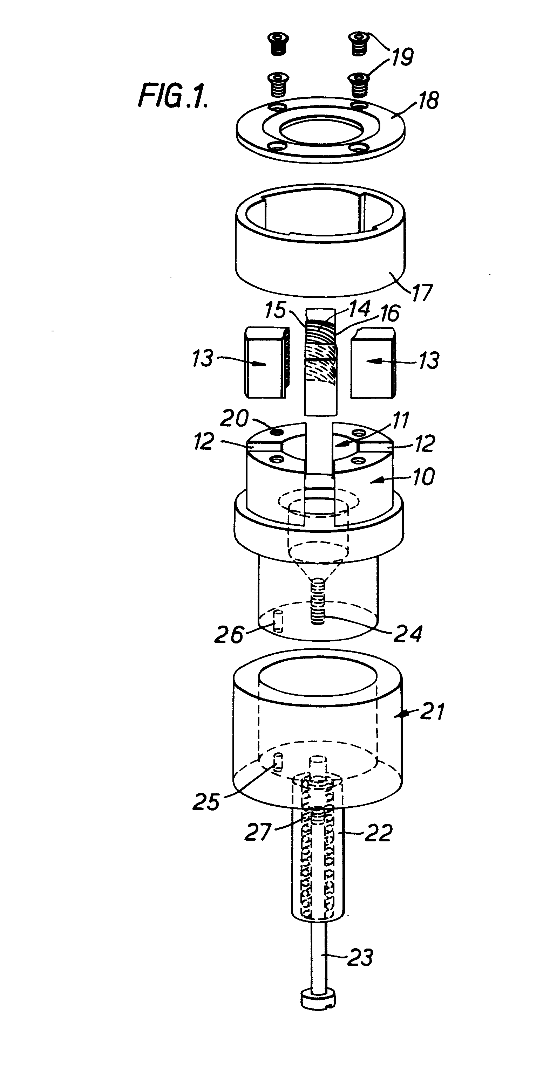

Referring to Figure 1, a thread chaser die head comprises a circular cylindrical die body 10 having a workpiece receiving blind axial bore 11. Four parallel-sided slots 12 are machined in the body 10, the slots having centre lines which in end view extend along respective radii of the die head at 90° to one another.

A set of four chasers 13 are located in their proper order in the four slots 12 and are capable of radial sliding movement therein. The chasers are manufactured by a method to be described below. Each chaser has a plurality of teeth 14                              which are elongate along arcs of a helix, the arcs being of the same diameters in respect of all the chasers and being centred on a different axis in respect of each said chaser, the axes being spaced apart from the axis of the die head so that the forward end 15 of each chaser tooth is nearer the die head axis than is its trailing end 16.

A cam ring 17 surrounds the chasers 13 and has a plurality of cam lobes engaged one each by an outer face of the respective chasers. Angular adjustment of the cam ring thus finely adjusts the radial location of the chasers for cutting the precise required diameter of thread. An end ring 18 is secured by four screws 19 which extend inside the cam ring 17 and between the chasers 13 into threaded bores 20 in the die body 10. Tightening of screws 18 serves to clamp the chasers 13 in their adjusted positions.

The die body 10 is partially slidingly received in an adaptor body 21 having an axial extension 22 which in use is clamped in the capstan or turret head of the lathe. A bolt 23 extends slidingly through an axial bore of the extension 22 into a threaded bore 24 in the die body 10. The bolt 23 permits relative axial sliding motion of the die body 10 and the adaptor 21. An offset shear pin 25 within the adaptor is received in a bore 26 in the die body to prevent relative rotation of the die body and the adaptor while allowing the relative axial sliding motion. A compression spring 27 is located within the bore of the extension 22 and acts between the extension and the bolt 23 to bias the die body and the adaptor axially towards one another. This arrangement is common in this art and its function is to permit the chasers alone to enforce and maintain the desired pitch of cut thread on the workpiece once the die head has been pushed onto the workpiece to commence thread cutting.

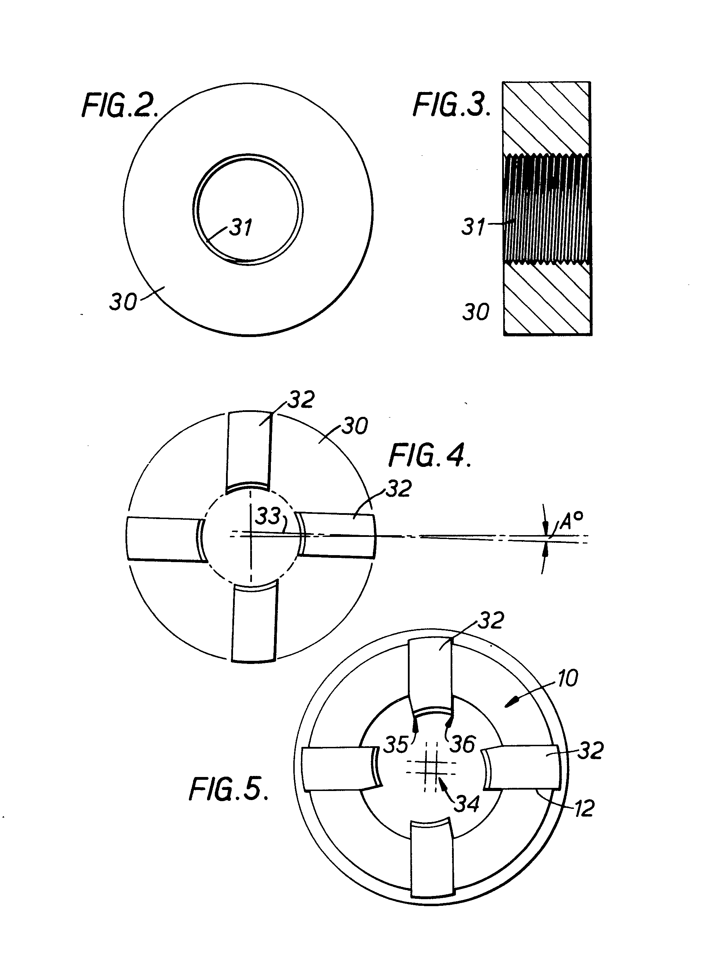

Referring now to Figures 2 to 5, the method of manufacturing the set of chasers 13 is illustrated. Figures 2 and 3 show a right circular steel cylinder 30 with an internal axial helical thread 31 cut therethrough. The thread may be hardened and ground as desired. Four parallel-sided sections 32 are cut from the threaded annular member, the sections being at $90^\circ$ intervals, and having centre lines 33 in the end view of Figure 4 which extend at a small angle A to a radius. The angle A lies in the range from $0.5^\circ$ to about $3^\circ$ and is preferably substantially $1^\circ$.

The four sections 32 form the set of chasers 13, the teeth thereof being constituted by arcuate portions of the original thread 31. The forward ends of the teeth may be ground as required to provide the cutting angle appropriate to the workpiece material. The chasers are then located in proper circumferential sequence in the four slots 12 of the die body as shown in Figure 5. Since the slots 12 are radial and the sections 32 are cut at a small angle, the chasers are located so that the tooth arcs are centred on a different axis 34 in respect of each said chaser, these axes being spaced apart from the die head axis, so that the forward end 35 of each chaser tooth is nearer to the die head axis than is its trailing end 36, thereby automatically providing a desirable cutting clearance.

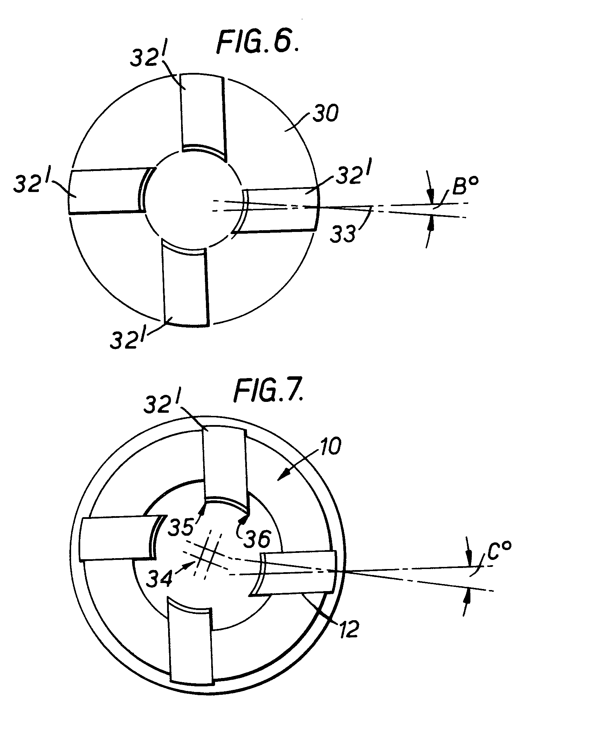

Figures 6 and 7 show steps in a second embodiment of a method according to the invention. In this embodiment, briefly, the four sections 32' are cut from the threaded annular member 30 with their centre lines extending at a substantial angle B to a radius. The four slots 12 in the die body are cut with centre lines extending at a substantial angle C to a radius, the angular difference between angles B and C lying in the range $0.5^{\circ}$ to $3^{\circ}$, preferably substantially $1^{\circ}$. The effect is thus functionally similar to the first embodiment in that the forward ends of the arcuate chaser teeth lie nearer the die head axis than do the trailing ends. The cutting load is however borne by the chasers and the die head in a somewhat different manner.

It will be appreciated that the chaser set can comprise six chasers, or indeed any other number provided that the circumferential spacing of the sections cut from the annular member corresponds precisely with the circumferential spacing of the die body slots. As is normal in this art each die body can accept a range of chaser sets to cut threads over a selected range of dimensions and standards, the chasers being of appropriate length and thread pattern.

It is possible in many cases to cut two complete sets of chasers from the annular member, the chasers of the second set being interleaved with those of the first set. In this way more economical use is made of the material of the annular member.

There are several advantages associated with the above described die head. It has proved possible to manufacture a working prototype wherein the overall outside diameter of the die head is 83 millimetres for a thread cutting capacity of up to 44 millimetres in diameter, the same capacity as required a prior art die body of 128 millimetres diameter. The chasers are sharpened in a fundamentally different manner. The present chasers are
sharpened by grinding back all the teeth simultaneously from
their forward ends 35. Since the teeth are arcuate the
cutting clearance is automatically preserved. Thus no teeth
are lost during successive resharpening operations and the
chasers remain effective for cutting right up to workpiece
shoulders. In the prior art chasers teeth are progressively
lost during successive resharpening operations, leading to
declining strength, accuracy and declining ability to cut
threads up to shoulders. Moreover in the prior art each
chaser in a set had to be re-ground to a precisely similar
extent because the grinding went parallel to the teeth, and
this necessitated the expense of a specific sharpening jig
for each chaser set. The present chasers are re-ground
perpendicular to the teeth and need not be so precisely re-
ground to the same extent as one another. The grinding for
resharpening enlarges the cut thread diameter and so the
cam ring 17 is turned to close in the sharpened chasers to
the appropriate extent.

Each set of the present chasers is formed as a set
of sections from a single internally threaded annular member, and it is a simple matter to cut the sections accurately
at 90° to one another. The helical angle setting between
the four chasers in the set is thus accurately ensured in
a relatively simple manner as compared with the process of
manufacture of the prior art chasers.

Die heads according to the invention may be made
self-opening in essentially the same manner as prior die
heads. Although self-opening increases the effective outside
diameter of the die head it does not do so to the same extent
as in the prior die heads. It will be appreciated that the
die head specifically described above is removed from the cut
workpiece by reversing the sense of screw rotation. In a
self-opening die head the chasers are spring loaded and are
triggered to move radially outward to clear the cut thread
at the end of a thread cutting operation. The die head can
then be retracted in an axial movement from the workpiece.

CLAIMS:

1.   A method of manufacturing a thread chaser die head comprising forming a plurality of circumferentially spaced chaser locating slots (12) in a cylindrical die body (10), forming a set of toothed chasers (13), and locating said chasers in their associated slots so that the forward end (15,35) of each tooth (14) is nearer the die head axis than is its trailing end (16,36); characterised in that said set of chasers (13) is manufactured by forming an annular member (30) with an internal helical thread (31); cutting a plurality of spaced sections (32) from said member, said plurality of sections corresponding in circumferential spacing to the circumferential spacing of said die body slots, whereby said cut sections (32) form said set of chasers (13) with arcuately elongate said teeth (14) constituted by arcuate portions of said internal thread (31); and the angle (A,B) to a radius of each said chaser differing from such angle (O,C) of the corresponding said locating slot (12).

2.   A method according to claim 1 characterised in that each said chaser (13) is cut from said annular member (30) so that its centre line (33) in end view extends at an angle to a radius in the range 0.5° to 3°, and wherein each said slot (12) has a centre line in end view extending along a radius of said die head.

3.   A method according to claim 2 wherein said angle is substantially 1°.

4.   A method according to claim 1 characterised in that each said chaser (13) is cut from said annular member (30) so that its centre line (33) in end view extends along a radius, and wherein each said slot (12) has a centre line in end view extending at an angle to a radius in the range 0.5° to 3°.

5.    A method according to claim 1 characterised in that each said chaser (13) is cut from said angular member (30) so that its centre line (33) in end view extends at a first angle (B) to a radius, and wherein each said slot (12) has a centre line in end view extending at a second angle (C) to a radius, said second angle differing from said first angle by an angular extent in the range 0.5° to 3°.

6.    A method of manufacturing a set of toothed thread chasers (13) for respective location in a plurality of circumferentially spaced chaser locating slots (12) in a cylindrical die body (10) so that the forward end (15,35) of each tooth (14) is nearer a said die head axis than is its trailing end (16,36); characterised in that said set of chasers (13) is manufactured by forming an annular member (30) with an internal helical thread (31); cutting a plurality of spaced sections (32) from said member, said plurality of sections corresponding in circumferential spacing to the circumferential spacing of said die body slots, whereby said cut sections (32) form said set of chasers (13) with arcuately elongate said teeth (14) constituted by arcuate portions of said internal thread (31); and the angle (A,B) to a radius of each said chaser differing from such angle (0,C) of the corresponding said locating slot (12).

7.    A thread chaser die head when made by a method as claimed in any one of claims 1 to 5.

8.    A set of toothed thread chasers when made by a method as claimed in claim 6.

FIG.1.

FIG.2.

31

30

FIG.3.

31

30

32

30

33

FIG.4.

32

A°

32

10

35  36

32

34

12

FIG.5.

# FIG.6.

32'     30

32'

32'

33    B°

32'

# FIG.7.

32'    10

35   36

34

12    C°

## DOCUMENTS CONSIDERED TO BE RELEVANT

| Category | Citation of document with indication, where appropriate, of relevant passages | Relevant to claim |
|---|---|---|
| A | FR - A - 484 698 (S.A. D'OUTILLAGE DE PRECISION et al.) | |
| A | US - A - 1 839 684 (E. LAWRENZ) | |
| A | US - A - 1 351 447 (O.A. SORENSEN) | |
| A | DE - C - 168 581 (A. WOLSCHKE et al.) | |
| A | US - A - 1 906 176 (S.F. NEWMAN et al.) | |
| A | DE - C - 382 022 (A. BROCKAMNN) | |
| A | DE - C - 252 318 (V. KÖNIG) | |

**CLASSIFICATION OF THE APPLICATION (Int. Cl.3)**

B 23 P 15/48
B 23 G 5/10

**TECHNICAL FIELDS SEARCHED (Int.Cl.3)**

B 23 G 5/00
B 23 P 15/48

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | | | |
|---|---|---|---|
| X | The present search report has been drawn up for all claims | | |
| Place of search Berlin | Date of completion of the search 20-10-1980 | Examiner MARTIN | |

EPO Form 1503.1 06.78